# EUROPEAN PATENT APPLICATION

(11) **EP 4 068 850 A1**
(43) Date of publication of application: **05.10.2022**
(21) Application number: 21199778.8
(22) Date of filing: 29.09.2021
(51) Int. Cl.: H04W 36/00, H04W 36/30, H04W 28/02, H04W 24/02, H04W 36/24, H04W 28/08

(54) **METHOD FOR IDENTIFYING USER EQUIPMENT FOR REAL-TIME HANDOVER TRIGGER IN OPEN-RADIO ACCESS NETWORK ENVIRONMENT**

(30) Priority: 31.03.2021 IN 202111015015
(71) Applicant: Sterlite Technologies Limited, Haryana 122002 (IN)
(72) Inventor: PAREKH, Shyam, California, 94563 (US); TANG, Kevin, California, 94568 (US); KUMAR, Abhishek, 122002 Haryana (IN); MANNA, Tanumay, 122002 Haryana (IN)
(74) Representative: Hepworth Browne

(57) **Abstract**

A method for identifying user equipment (112a,-112e) for real-time handover trigger in open-radio access network (O-RAN) environment (200) includes steps to obtain a serving cell handover parameter with respect to a neighbour cell handover parameter, to determine user equipment from the plurality of user equipment (112a-112e) positioned in the serving cell, to identify the user equipment positioned in the serving cell and transmit the serving cell handover parameter with respect to the neighbour cell handover parameter associated with the neighbour cell of a plurality of neighbour cells (108a, 108b) to the identified user equipment.

## Description

### TECHNICAL FIELD

Embodiments of the present disclosure relate to a field of wireless communication systems. And more particularly, relates to a method for identifying user equipment (UE) for real-time handover trigger in an open-radio access network (O-RAN) environment.

The present application claims the benefit of Indian Application No. 202111015015 titled "Method for Identifying User Equipment for Real-time Handover Trigger in Open-radio Access Network Environment" filed by the applicant on 31^{st} March 2021, which is incorporated herein by reference in its entirety.

### Background Art

When a user equipment (UE) is moved from a service area defined by "X" cell into that defined by "Y" cell, the UE must disconnect with "X" base station and connect with "Y" base station (i.e., establish a new connection). This operation is known as handover (HO) or a cell reselection. Network congestion is a growing problem for wireless network operators. For example, for some UEs, the cell offering the strongest radio reception may also be the most heavily loaded with other UEs who are currently being served. Handing over still more UEs into that cell shall aggravate the congestion that may already exist. This may result in degraded quality of service, dropping of calls, denial of service, and the like. All of these may result in loss of reputation of the wireless network operators and loss of revenue for the wireless network operators.

Although the need of HO, the unnecessarily switching of the serving cell and in case of switching to a loaded cell, in both these cases, causes wastage of radio resources and decrease in system efficiency. Hence, in order to effectively manage the HO operation, it is vital to monitor and consider the parameters, including the variation therein, constituting the HO in consideration with load balancing of the cells. The parameters may include, but not limited to, signal strength (RSRP/RSRQ), cell load values, cell individual offset (CIO), hysteresis loss, and the like. Especially, considering the current expansion in the wireless communication networks are becoming increasingly complex and due to introduction of new standards and protocols (such as 4G/5G standards), the monitoring of these parameters in order to effectively utilize the radio resources, is at utmost priority. Some of the prior art references are given below:

WIPO Patent Application "WO2018005089A1" discloses a method which performs a set of checks for verifying that a mobile terminal supports interference cancellation. A handover-offset value is determined to change a handover threshold to trigger handover of a wireless connection of the mobile terminal from first cell to second cell with the handover-offset value being determined based on a resource-utilization level of the second cell. A control message is transmitted to cause the mobile terminal to change the handover threshold, where the control message is transmitted in response to the checks to be passed.

US Patent Application "US9560560B2" discloses a user equipment (UE) which has a hardware processing circuit to receive a measurement report configuration message that includes multiple measurement events to be determined at UE, from an Evolved Node-B (eNB), and transmits the measurement report when combined measurement event occurs. The combined measurement event is triggered when all of the multiple measurement events occur. The measurement events are related to signal measurements performed on one or more signals received at UE from cells configured for operation in the network.

There is an urgent need for a technical solution that overcomes the above stated limitations in the prior arts such as identification of UEs by checking the quality indicator of UEs in the serving cell, and identifying the UEs to which CIO values (handover parameters) is to be transmitted.

Hence, the present disclosure focuses on a method for identifying user equipment for real-time handover triggers in an open-radio access network environment.

### SUMMARY OF THE DISCLOSURE

Embodiments of the present disclosure provide a method for identifying at least one user equipment positioned in a serving cell for real-time handover trigger by a Radio access network (RAN) controller in an open RAN (O-RAN) environment.

According to a first aspect of the present disclosure, the method comprising steps of obtaining a serving cell handover parameter with respect to a neighbour cell handover parameter associated with at least one neighbour cell of the plurality of neighbour cells, determining one or more user equipment from the plurality of user equipment positioned in the serving cell, identifying at least one user equipment from the one or more determined user equipment positioned in the serving cell and transmitting the serving cell handover parameter with respect to the neighbour cell handover parameter associated with at least one neighbour cell of the plurality of neighbour cells to at least one identified user equipment.

In accordance with an embodiment of the present disclosure, each of one or more determined user equipment has a channel quality index (CQI) less than a predetermined threshold lower CQI.

In accordance with an embodiment of the present disclosure, at least one identified user equipment has a throughput value more than a predetermined threshold throughput.

In accordance with an embodiment of the present disclosure, the RAN controller is connected with a plurality of E2 nodes. The plurality of E2 nodes is connected with a plurality of user equipment positioned in the serving cell.

In accordance with an embodiment of the present disclosure, the serving cell is adjacent to a plurality of neighbour cells and covers a location for serving the plurality of user equipment.

According to the second aspect of the present disclosure, the method further includes checking if a count of at least one identified user equipment is more than or equal to a predetermined user equipment threshold for the serving cell and terminating the identification of at least one user equipment when the count of at least one identified user equipment is below the predetermined user equipment threshold for the serving cell.

According to the third aspect of the present disclosure, the method includes checking if a count of at least one identified user equipment is below a predetermined user equipment threshold for the serving cell and increasing the predetermined threshold lower CQI.

According to the fourth aspect of the present disclosure, the method further includes checking if a count of at least one identified user equipment is below a predetermined user equipment threshold for the serving cell, increasing the predetermined threshold lower CQI, determining one or more second user equipment positioned in the serving cell, identifying at least one second user equipment from the one or more determined second user equipment positioned in the serving cell and transmitting the serving cell handover parameter with respect to the neighbour cell handover parameter associated with at least one neighbour cell of the plurality of neighbour cells to at least one identified second user equipment.

In accordance with an embodiment of the present disclosure, each of one or more determined second user equipment has the channel quality index (CQI) less than the increased predetermined threshold lower CQI.

In accordance with an embodiment of the present disclosure, at least one identified second user equipment has the throughput value more than the predetermined threshold throughput.

According to the fifth aspect of the present disclosure, the method checks if the serving cell handover parameter with respect to the neighbour cell handover parameter associated with at least one neighbour cell of the plurality of neighbour cells is new.

In accordance with an embodiment of the present disclosure, the one or more user equipment positioned in the serving cell, having the channel quality index (CQI) parameter less than the predetermined threshold lower CQI.

According to the sixth aspect of the present disclosure, the method includes identifying a second neighbour cell when the serving cell handover parameter with respect to the neighbour cell handover parameter associated with at least one neighbour cell of the plurality of neighbour cells is pre-used for the identification of at least one user equipment.

In accordance with an embodiment of the present disclosure, the method minimizes count of unicast transmission of the serving handover parameter with respect to the neighbour cell handover parameter to the plurality of user equipment (112a-e) positioned in the serving cell.

According to the seventh aspect of the present disclosure, the Open-Radio Access Network (O-RAN) architecture includes a Service Management and Orchestration (SMO) framework and a radio access network (RAN) intelligent controller (RIC). The radio access network (RAN) intelligent controller (RIC) is a non-real-time-radio intelligent controller (Non-RT-RIC) and/or a near-real-time-radio intelligent controller (Near-RT-RIC).

In accordance with an embodiment of the present disclosure, the base stations is operably configured to handle transmission and reception of signals associated with either the serving cell and the neighbour cells.

In accordance with an embodiment of the present disclosure, the plurality of UE is a computer, a personal digital assistant (PDA), a laptop or electronic notebook, a cellular telephone, and alike.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 illustrates a pictorial representation of an exemplary radio access network (RAN) in accordance with an embodiment of the present disclosure;
Fig. 2 illustrates a pictorial representation of an Open-Radio access network (O-RAN) architecture in accordance with an embodiment of the present disclosure;
Fig. 3 is a flow diagram illustrating a method for efficiently updating handover parameters in accordance with an embodiment of the present disclosure.

### REFERENCE LIST

Radio Access Network (Ran) 100
Ran Controller 102
Serving Base Station 104
Neighbour Base Stations 106a - 106b
Neighbour Cells 108a - 108b
Serving Cell 110
User Equipment (UEs) such as 112a, 112b, 112c, 112d, and 112e

The method and system are illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

**Following terms shall apply throughout the present disclosure:**

Standard Networking Terms and Abbreviation: New RAN: A Radio Access Network which can support either NR/E-UTRA or both and have capabilities to interface with Next Generation Core Network (NG-CN). NG-C/U is a Control/User Plane interface towards NG-CN.

gNB: New Radio (NR) Base stations which have capability to interface with 5G Core named as NG-CN over NG-C/U (NG2/NG3) interface as well as 4G Core known as Evolved Packet Core (EPC) over S1-C/U interface.

LTE eNB: An LTE eNB is evolved eNodeB that can support connectivity to EPC as well as NG-CN.

Non-standalone NR: It is a 5G Network deployment configuration, where a gNB needs an LTE eNodeB as an anchor for control plane connectivity to 4G EPC or LTE eNB as anchor for control plane connectivity to NG-CN.

Standalone NR: It is a 5G Network deployment configuration where gNB does not need any assistance for connectivity to core Network, it can connect by its own to NG-CN over NG2 and NG3 interfaces.

Non-standalone E-UTRA: It is a 5G Network deployment configuration where the LTE eNB requires a gNB as anchor for control plane connectivity to NG-CN.

Standalone E-UTRA: It is a typical 4G network deployment where a 4G LTE eNB connects to EPC.

Xn Interface: It is a logical interface which interconnects the New RAN nodes i.e., it interconnects gNB to gNB and LTE eNB to gNB and vice versa.

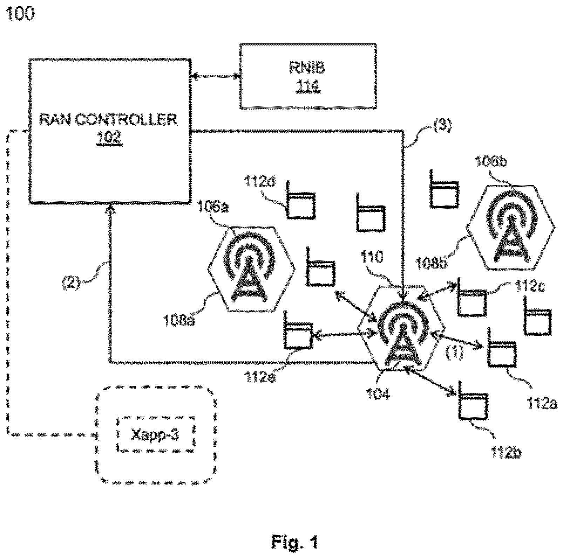

Fig. 1 illustrates a pictorial representation of an exemplary radio access network (RAN) in accordance with an embodiment of the present disclosure. The radio access network (RAN) (100) comprises a plurality of user equipment (UEs) such as (112a, 112b, 112c, 112d, and 112e) connected to a serving base station (104) position in a serving cell (110). Further, the RAN (100) comprises a plurality of neighbour base stations (106a and 106b) positioned in respective neighbour cells (108a and 108b). Particularly, the radio access network (RAN) is a part of a telecommunications system which may connect individual devices to other parts of a network through radio connections. Moreover, RAN may provide a connection of user equipment such as mobile phones or computers with the core network of the telecommunication systems. Furthermore, RAN may be an essential part of the access layer in the telecommunication systems which utilize base stations (such as eNB and gNB) for establishing radio connections.

In some examples, the RAN (100) comprises a RAN controller (102). The RAN (100), in one example, is implemented in a virtualized network architecture (such as for example, open-radio access network (O-RAN)) and comprises at least one RAN controller (102).

In one aspect of the present disclosure, the RAN controller (102) is configured to perform operations related to handover of the plurality of UEs (112a-e). In some examples, the RAN controller (102) may be implemented via a virtualized application that is xApps i.e., xApp-3 that are configured to virtually perform the operations of the RAN controller (102).

In another aspect of the present disclosure, the RAN controller (102) is an individual controller, which is separate from the RAN (100). In this situation, the RAN controller (102) is connected with the RAN (100) by means of a network connection such as radio connections.

In particular, the RAN controller (102) may be configured to communicate with a core network (not shown) comprising an evolved packet core (EPC) using an "S1" interface. More particularly, the RAN controller (102) may communicate with the core network (not shown) comprising Mobility Management Entity (MME) and a User plane entity (UPE) identified as Serving Gateway (S-GW) using S1-C and S1-U for control plane and user plane, respectively.

In accordance with an embodiment of the present disclosure, all of the plurality of UE (112a-e) periodically measure received signal strengths/qualities from all base stations (104, 106a and 106b) and construct signal strength/quality indicators such as reference signal received power (RSRP) and reference signal received quality (RSRQ) values as defined in the 3GPP standards. Then using the criteria as defined in the 3GPP standards, when an A3 event triggers, these measurement results are reported to the serving base station (104). The disclosure is not limited to the A3 event (for example, subscription of multiple events such as A1-A6 and the measurements and handover parameters defined therein. Any future standards are expected to have equivalent handover events and equivalent measurements and parameters associated with such handover events. For those standards, when such equivalent events trigger, said equivalent measurements are reported (1). The measurements in the form of measurement reports (MRs).

In accordance with an embodiment of the present disclosure, the MRs first sent (2) to the RAN controller (102). The RAN controller (102) then executes a real-time handover trigger and target cell selection, according to the proposed disclosure. Additionally, base station loads, in terms of number of UEs served, total computational, energy, memory, wireless resource usage levels of the base station, etc., are also made available, by the RAN controller (102). Further, for example, the HO parameters of each cell are also provided to the RAN controller (102). The HO parameters such as, for example, offset parameters (i.e., cell indication offset (CIO)), hysteresis parameter and time to trigger parameter defined therein, or equivalent parameters of future standards. In an example, the MRs may also include signal strength metrics that is RSRP and/or RSRQ values.

Alternatively, when the RAN controller (102) receives the MRs and/or HO parameters, it triggers a first HO process and a second HO process. The first HO process and second HO process is performed parallelly on the serving cell (110) and on all the neighbour cells (108a and 108b). Moreover, the first HO process and second HO process are triggered simultaneously in parallel. That is, multiple HO of the UEs can be performed accurately in that the RAN controller (102) can be configured to perform, parallelly on all the identified target neighbour cells (108a and 108b), the HO process (first and second) from the serving cell (110) to the identified target neighbour cells (108a and 108b).

In accordance with an embodiment of the present disclosure, the base stations (104, 106a and 106b) (may include, for example, an access node such as e.g. a Radio Base Station (RBS), also referred to as e.g., evolved Node B ("eNB"), "eNodeB", "NodeB", "B node", gNB, or BTS (Base Transceiver Station), depending on the technology and terminology used. The base stations (104, 106a and 106b) may be a logical node that handles transmission and reception of signals associated with either the serving cell (110) and the neighbour cells (108a and 108b).

In accordance with an embodiment of the present disclosure, the serving cell (110) and the neighbour cells (108a and 108b) may connect to each other via "Xn" interface. The base station (104) and the neighbour base stations (106a and 106b) may connect to one or more antennas, such as the antenna, thus respective base stations may be responsible for the serving cell (110) and the neighbour cells (108a and 108b). In some example, the base station (104) can be configured to broadcast the HO parameters or the updated HO parameters to the plurality of UE (112a-e) served by the base station (104). The HO parameters, in one example, may also be communicated to the neighbour base stations (106a and 106b) using the "Xn" interface.

In accordance with an embodiment of the present disclosure, the plurality of UE (112a-e) may be the devices used to initiate a communication, such as a computer, a personal digital assistant (PDA), a laptop or electronic notebook, a cellular telephone, or any other device, component, element, or object capable of initiating voice, audio, video, media, or data exchanges within the RAN (100).

Further, the components of the RAN controller (102) may be implemented using one or more application-specific integrated circuits (ASICs) adapted to perform some or all of the applicable functions in hardware. Alternatively, the functions may be performed by one or more other processing units (or cores), on one or more integrated circuits. In other examples, other types of integrated circuits may be used (e.g., Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific processors.

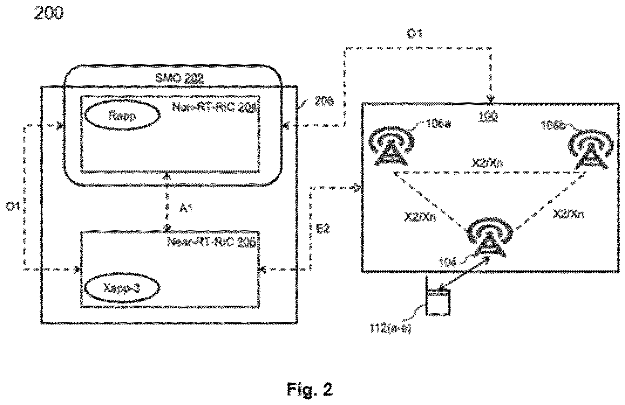

Fig. 2 illustrates a pictorial representation of an Open-Radio access network (O-RAN) architecture in accordance with an embodiment of the present disclosure. The Open-Radio Access Network (O-RAN) architecture (200) includes a Service Management and Orchestration (SMO) framework (202) and a radio access network (RAN) intelligent controller (RIC) (208) connected to the RAN (100).

Particularly, the Open-Radio Access Network (O-RAN) architecture (200) utilizes an Open-Radio Access Network (O-RAN), which is an evolved version of prior radio access networks, making the prior radio access networks more open and smarter than previous generations. Moreover, the O-RAN provides real-time analytics that drive embedded machine learning systems and artificial intelligence back end modules to empower network intelligence. Further, the O-RAN includes virtualized network elements with open and standardized interfaces. The open interfaces are essential to enable smaller vendors and operators to quickly introduce their own services, or enables operators to customize the network to suit their own unique needs.

In accordance with an embodiment of the present disclosure, the SMO (202) is configured to provide SMO functions/services such as data collection and provisioning services of the RAN (100). The RAN (100), herein, is implemented in the O-RAN computing architecture (200). The RAN (100) may implement a single radio access technology (RAT) (4G/5G) or multiple RATs (4G and 5G) using the base stations (104, 106a, 106b, 106c... 106n) located in the RAN (100). The data collection of the SMO framework (202) may include, for example, data related to a bandwidth of a wireless communication network and at least one of the pluralities of UEs (112a-e).

In accordance with an embodiment of the present disclosure, the base stations (104, 106a, 106b, 106c... 106n) may be for e.g., a Radio Base Station (RBS), also referred to as e.g., evolved Node B ("eNB"), "eNodeB", "NodeB", "B node", gNB, or BTS (Base Transceiver Station), depending on the technology and terminology used. In some implementations, the base stations (104, 106a, 106b, 106c... 106n) may be a logical node that handles transmission and reception of signals associated with the plurality of cells. The base station (104) may connect to each other i.e., with the neighbour base stations (106a, 106b..106n) via "Xn" interface either in a same network or to a network node of another network (intra-network). Each base station (104, 106a, 106b, 106c... 106n) may connect to one or more antennas.

In accordance with an embodiment of the present disclosure, the RIC (208) can be a non-real-time-radio intelligent controller (Non-RT-RIC) (204) and a near-real-time-radio intelligent controller (Near-RT-RIC) (206). Particularly, the near real time RAN Intelligent Controller (near RT RIC)is a logical function that enables near-real-time control and optimization of O-RAN elements and resources via fine-grained data collection and actions over the E2 interface. The Non-Real Time Radio Intelligent Controller (non-RT-RIC) is a logical function that enables non-real-time control and optimization of RAN elements and resources, AI/ML workflow including model training and updates, and policy based guidance of applications/features in near-RT RIC. It is a part of the Service Management and Orchestration Framework and communicates to the near-RT RIC using an A1 interface. Non-RT control functionality (> 1s) and near-Real Time (near-RT) control functions (< 1s) are decoupled in the RIC. The Non-RT functions include service and policy management, RAN analytics and model-training for some of the near-RT RIC functionality, and non-RT RIC optimization.

Further, O-CU is O-RAN Central Unit, which is a logical node hosting RRC (Radio Resource Control) protocol, SDAP (Service Data Adaptation Protocol) and PDCP (Packet Data Convergence Protocol). O-CU-CP is O-RAN Central Unit - Control Plane, which is a logical node hosting the RRC and the control plane part of the PDCP protocol. The O-CU-UP is O-RAN Central Unit - User Plane, which is a logical node hosting the user plane part of the PDCP protocol and the SDAP protocol. The O-DU is O-RAN Distributed Unit, which is a logical node hosting RLC/MAC/High-PHY layers based on a lower layer functional split. The O-RU is O-RAN Radio Unit, which is a logical node hosting Low-PHY layer and RF processing based on a lower layer functional split. This is similar to 3GPP's "TRP" or "RRH" but more specific in including the Low-PHY layer (FFT/iFFT, PRACH extraction). An O1 interface is an interface between management entities in Service Management and Orchestration Framework and O-RAN managed elements, for operation and management, by which FCAPS (fault, configuration, accounting, performance, security) management, Software management, File management shall be achieved. The xAPP is an independent software plug-in to the Near-RT RIC platform to provide functional extensibility to the RAN by third parties. The near-RT RIC controller can be provided with different functionalities by using programmable modules as xAPPs, from different operators and vendors.

In accordance with an embodiment of the present disclosure, the Non-RT-RIC (204) may be configured to support intelligent RAN optimization in non-real-time. Further, the Non-RT-RIC (204) can be configured to leverage the SMO services and may be a part of the SMO (202). One such advantage of configuring the RAN (100) within the O-RAN computing environment and/or O-RAN architecture (200) is leveraging the intellectualization ("Artificial intelligence (AI)/Machine Learning (ML)) of the Non-RT-RIC (204) and the Near-RT-RIC (206).

In accordance with an embodiment of the present disclosure, the Near-RT-RIC (206) may host the plurality of xApps. The xApps (at the Near-RT-RIC (206)) uses an "E2" interface to collect near real-time RAN (100) information and to provide value added services using these primitives, guided by the policies/configuration and the enrichment data provided by the "A1" interface from the xApps at the Non-RT-RIC (204). An "O1" interface collects data for training in the Non-RT RIC (204) (integrated with SMO (202).

In one example, the "E2" and "A1" interface may be used to collect control messages, subscription messages (i.e., subscription to RSRP/RSRQ reports and Limited-time subscription for A3 events and A3 RSRP/RSRQ Reports), policy trigger messages, indication messages, machine learning (ML) management and enrichment information types of messages, and the like. The real-time measurements comprising RSRP/RSRQ measurements, channel quality measurements and the like. The subscription messages such as, for example, RSRP/RSRP event messages, A3 events messages, limited-time based A3 event messages, and the like. The policy trigger messages, for example, spectrum allocation policies, radio assignment policies, and the like. The O-RAN architecture (200) comprises a virtualized network architecture having at least one RAN controller (102) that is configured to perform the operations as detailed above.

In accordance with an embodiment of the present disclosure, at least one user equipment positioned in the serving cell (110) is identified for real-time handover trigger by the Radio access network (RAN) controller (102) in the open RAN (O-RAN) environment (200). Particularly, the O-RAN environment (200) has a virtualized network architecture having at least one RAN controller (102). The RAN controller (102) is connected with a plurality of E2 nodes. The plurality of E2 nodes is connected with the plurality of user equipment (112a-e) positioned in the serving cell (110). Further, the serving cell (110) covers a location for serving the plurality of user equipment (112a-e). Furthermore, the serving cell (110) is adjacent to the plurality of neighbour cells (108a, 108b).

In an example, the parameters used by xApp-3 includes LCQI (Lower CQI Threshold) = 4 (Default), HCQI (Higher CQI Threshold) = 6 (Default), THPT (UE Throughput Threshold) = 50 Kbps (Default), NMEAS (Number of individual measurements) used or throughput computation = 8 (Default), Δ (Inter-measurement interval) = 128 ms (Default), and N (Threshold for # of UEs = 8 (Default).

In an implementation, a serving cell handover parameter is obtained with respect to a neighbour cell handover parameter associated with at least one neighbour cell of the plurality of neighbour cells (108a, 108b).

In another example, the handover parameter may be alternatively used for the handover parameter. In another example, handover parameter or handover parameter may be cell individual offset value. The cell handover parameter is a comparative load value of the serving cell with respect to the neighbour cell. Further, one or more user equipment is determined from the plurality of user equipment (112a-e) positioned in the serving cell. Each of one or more determined user equipment has a channel quality index (CQI) less than a predetermined threshold lower CQI. At least one user equipment is identified from the one or more determined user equipment positioned in the serving cell. The at least one identified user equipment has a throughput value more than a predetermined threshold throughput. Further, the serving cell handover parameter with respect to the neighbour cell handover parameter associated with at least one neighbour cell of the plurality of neighbour cells (108a, 108b) is transmitted to at least one identified user equipment.

In yet another example, when a UE starts measuring the neighbour cells, there may be several other measurement configuration parameters that specify the triggering of handover measurement reports from the UE. One of such and most common triggered criteria includes "Event A3": Neighbour cells become better than an offset relative to the serving cell. The offset values are known as cell individual offset (CIO) defined by the network for each cell and communicated to the UE as one of the measurement configuration parameters (also referred as load parameter, handover parameters or handover parameters, herein) along with signal strength metrics (Reference Signals Received Power (RSRP)/Reference Signal Received Quality (RSRQ)), hysteresis metrics, and the like. For clarity, handover parameters, load parameters and handover load parameters may be used alternatively in the draft.

Further, a count of at least one identified user equipment is checked if it is more than or equal to a predetermined user equipment threshold for the serving cell or below the predetermined user equipment threshold for the serving cell. In case, if the count of at least one identified user equipment is below the predetermined user equipment threshold for the serving cell, the identification of at least one user equipment is terminated. Alternatively, if the count of at least one identified user equipment is below the predetermined user equipment threshold for the serving cell, the predetermined threshold lower CQI is increased.

Subsequently, one or more second user equipment positioned in the serving cell is determined. Each of the one or more determined second user equipment has the channel quality index (CQI) less than the increased predetermined threshold lower CQI. In other words, xCQI ≤ HCQI. At least one second user equipment is identified from the one or more determined second user equipment positioned in the serving cell. The at least one identified second user equipment has the throughput value more than the predetermined threshold throughput. The serving cell handover parameter with respect to the neighbour cell handover parameter associated with at least one neighbour cell of the plurality of neighbour cells (108a, 108b) is transmitted to at least one identified second user equipment.

In an example, it is checked if the serving cell handover parameter with respect to the neighbour cell handover parameter associated with at least one neighbour cell of the plurality of neighbour cells (108a, 108b) is new. The one or more user equipment positioned in the serving cell, having the channel quality index (CQI) parameter less than the predetermined threshold lower CQI is determined when the serving cell handover parameter with respect to the neighbour cell handover parameter associated with at least one neighbour cell of the plurality of neighbour cells (108a, 108b) is new.

Further, a second neighbour cell is identified when the serving cell handover parameter with respect to the neighbour cell handover parameter associated with at least one neighbour cell of the plurality of neighbour cells (108a, 108b) is pre-used for the identification of at least one user equipment. The present disclosure minimizes count of unicast transmission of the serving handover parameter with respect to the neighbour cell handover parameter to the plurality of user equipment (112a-e) positioned in the serving cell.

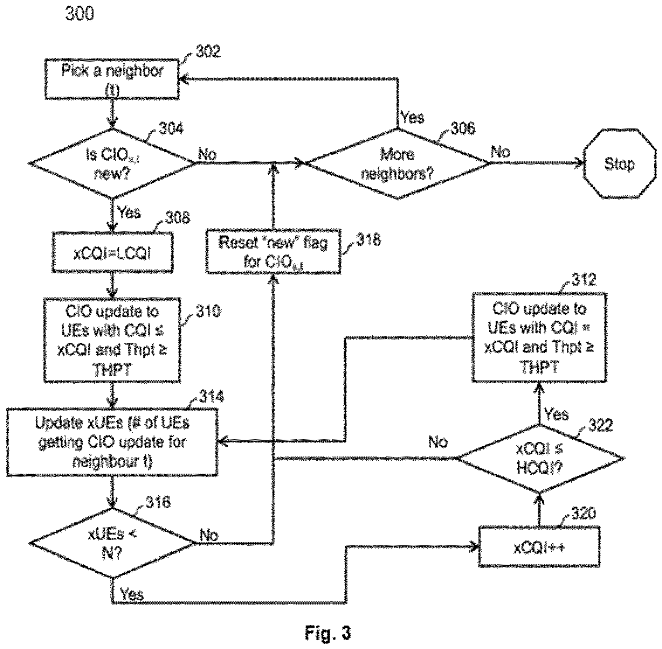

Fig. 3 is a flow diagram illustrating a method for efficiently updating handover parameters (xApp-3) in accordance with an embodiment of the present disclosure. In an example, the flow chart (300) is executed for the serving cell.

At step 302, pick one of the neighbors of the serving cell. In an example, at least one such neighbour exists. Further, this neighbour is designated as cell t.

At step 304, retrieves CIOs, t value from a radio network information base (RNIB) (114) and checks if this value has been updated by xApp-1 since the last time it was checked by xApp-3. The RNIB (114) may be, in one example, a storage unit for old/existing/new CIOs.

If this is not a new value, then proceed to step 306. At step 306, the execution moves to the next neighbour, if one exists.

If this is a new value, then proceed to step 308. At step 308, the CIOs, t value is new, then xApp-3 identifies the UEs which are possibly at the cell edge. In addition, it is approximated by identifying the UEs which have relatively low CQI indices. For this purpose, the variable xCQI is set to the parameter LCQI.

At step 310, all of the plurality of UE (112a-e) with CQI index no higher than LCQI are identified. Among such UEs, the list of UEs is further narrowed by identifying the UEs that have recent throughput at least as large as the parameter THPT. Recent throughput for the plurality of UE (112a-e) is obtained by summing the total number of bits transferred by the UE in the DL and UL directions over the last NMEAS measurement intervals and dividing the sum by NMEAS*Δ. Further, this last task is designed to limit sending the CIO updated to only those UEs that are currently contributing in a significant way to the loading in the serving cell. For ease of execution, it may be desirable to execute sequentially the two sub-steps of limiting UEs by their CQI indices and limiting UEs by their recent throughput levels.

At step 312, if the updated CQI threshold is still no larger than the HCQI parameter, all UEs with CQI indices equal to the new CQI threshold (current xCQI) are identified as the additional UEs that may potentially receive the CIOs,t update. Among such UEs, the list of UEs is further narrowed by identifying the UEs that have recent throughput at least as large as the parameter THPT. As described earlier, for ease of operation, it may be desirable to execute sequentially the two sub-steps of limiting UEs by their CQI indices and limiting UEs by their recent throughput levels.

At step 314, the total number of UEs identified so far for CIO update is stored in the variable xUEs.

At step 316, checks if the number of UEs identified for CIO update is below the threshold N, another parameter for xApp-3. If the number of such UEs has reached the value N, no more UEs will be identified for CIO update for the cell pair (s, t). The cell pair (s, t) are the selected serving cell and target cell.

At step 318, the identification is done for the UEs that should be sent to CIOs, t. Hence, the "new" flag associated with CIOs, t is reset.

The flow chart (300) may include yet another step to look for another neighbour t of cells. If no additional neighbour exists, xApp-3 execution for the serving cell can be ended. The flow chart (300) may include yet another step that can stop the execution of the method for the serving cell.

At step 320, if the number of UEs identified for CIO update is below the threshold N, the current CQI threshold (xCQI) used for designating UEs as the cell edge UEs (and hence getting identified for CIO update) is increased by one.

At step 322, check if xCQI threshold is still no larger than the HCQI parameter. If xCQI threshold exceeds HCQI, no more UEs will be identified for CIO update for the cell pair (s, t).

In an example, the method in the flow chart (300) requires low processing for identification of handover requirements.

In another example, the method in the flow chart (300) is optimized for selecting the plurality of UE (112a-e) which are actually active and requires handover.

In yet another example, the method in the flow chart (300) minimizes the required unicast transmissions to the plurality of UE (112a-e) without reducing the MLB efficacy.

In yet another example, the method in the flow chart (300) updates only the UEs that are likely to be at the cell edge (based on the available CQI information).

In yet another example, the method in the flow chart (300) updates only the UEs that are likely to be contributing to the cell loading (based on the throughput information for the individual UEs).

Hence, the present disclosure aims at providing the real-time handover based on the real-time monitoring and considering the cell load values and adjusting the CIO values accordingly in a cyclic manner.

It may be noted that the flowchart 300 is explained to have above stated process steps, however, those skilled in the art would appreciate that the flowchart 300 may have more/less number of process steps which may enable all the above stated embodiments of the present disclosure.

The open interfaces also enable multi-vendor deployments, enabling a more competitive and vibrant supplier ecosystem. Similarly, open source software and hardware reference designs enable faster, more democratic and permission less innovation. Further, the O-RAN introduces a self-driving network by utilizing new learning based technologies to automate operational network functions. These learning based technologies make the O-RAN intelligent. Embedded intelligence, applied at both component and network levels, enables dynamic local radio resource allocation and optimizes network wide efficiency. In combination with O-RAN's open interfaces, AI-optimized closed-loop automation is a new era for network operations.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

The methods and processes described herein may have fewer or additional steps or states and the steps or states may be performed in a different order. Not all steps or states need to be reached. The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or non-volatile memory (e.g., magnetic disk storage, optical storage, EEPROM and/or solid state RAM)

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

## Claims

1. A method for identifying at least one user equipment positioned in a serving cell (110), for real-time handover trigger by a Radio access network (RAN) controller (102) in an open RAN (O-RAN) environment (200), **characterized in that** steps of:
obtaining a serving cell handover parameter with respect to a neighbour cell handover parameter associated with at least one neighbour cell of the plurality of neighbour cells (108a, 108b);
determining one or more user equipment from the plurality of user equipment (112a-112e) positioned in the serving cell,
identifying the at least one user equipment from the one or more determined user equipment positioned in the serving cell; and
transmitting the serving cell handover parameter with respect to the neighbour cell handover parameter associated with the at least one neighbour cell of the plurality of neighbour cells (108a, 108b) to the at least one identified user equipment.

2. The method as claimed in claim 1, wherein each of one or more determined user equipment has a channel quality index (CQI) less than a predetermined threshold lower CQI.

3. The method as claimed in claim 1 or 2, wherein the at least one identified user equipment has a throughput value more than a predetermined threshold throughput.

4. The method as claimed in any preceding claim, wherein the O-RAN environment (200) has a virtualized network architecture having at least one RAN controller (102), the RAN controller (102) is connected with a plurality of E2 nodes.

5. The method as claimed in any preceding claim, wherein the plurality of E2 nodes is connected with a plurality of user equipment (112a-112e) positioned in the serving cell (110).

6. The method as claimed in any preceding claim, wherein a serving cell (110) is adjacent to a plurality of neighbour cells (108a, 108b) the serving cell (110) covers a location for serving the plurality of user equipment (112a-112e).

7. The method as claimed in any preceding claim, wherein the method further comprises:
checking if a count of the at least one identified user equipment is more than or equal to a predetermined user equipment threshold for the serving cell; and
terminating the identification of the at least one user equipment when the count of the at least one identified user equipment is below the predetermined user equipment threshold for the serving cell.

8. The method as claimed in any preceding claim, wherein the method further comprises checking if a count of the at least one identified user equipment is below a predetermined user equipment threshold for the serving cell; and increasing the predetermined threshold lower CQI.

9. The method as claimed in any preceding claim, wherein the method further comprises:
checking if a count of the at least one identified user equipment is below a predetermined user equipment threshold for the serving cell;
increasing the predetermined threshold lower CQI;
determining one or more second user equipment positioned in the serving cell;
identifying at least one second user equipment from the one or more determined second user equipment positioned in the serving cell; and
transmitting the serving cell handover parameter with respect to the neighbour cell handover parameter associated with the at least one neighbour cell of the plurality of neighbour cells (108a, 108b) to the at least one identified second user equipment.

10. The method as claimed in claim 9, wherein each of one or more determined second user equipment has the channel quality index (CQI) less than increased predetermined threshold lower CQI.

11. The method as claimed in claim 9 or 10, wherein at least one identified second user equipment has the throughput value more than the predetermined threshold throughput.

12. The method as claimed in any preceding claim, wherein the method comprises a step of checking if the serving cell handover parameter with respect to the neighbour cell handover parameter associated with the at least one neighbour cell of the plurality of neighbour cells (108a, 108b) is new.

13. The method as claimed in any preceding claim, wherein the one or more user equipment positioned in the serving cell, having the channel quality index (CQI) parameter less than the predetermined threshold lower CQI.

14. The method as claimed in any preceding claim, wherein the one or more user equipment positioned in the serving cell, having the channel quality index (CQI) parameter less than the predetermined threshold lower CQI.

15. The method as claimed in any preceding claim, wherein the method minimizes count of unicast transmission of the serving handover parameter with respect to the neighbour cell handover parameter to the plurality of user equipment (112a-112e) positioned in the serving cell.
